Europäisches Patentamt

European Patent Office

Office européen des brevets

(11) Veröffentlichungsnummer: **0 265 936 B1**

(12) **EUROPÄISCHE PATENTSCHRIFT**

(45) Veröffentlichungstag der Patentschrift: **02.05.91**

(21) Anmeldenummer: **87115858.0**

(22) Anmeldetag: **29.10.87**

(51) Int. Cl.⁵: **H04B 10/00, G08C 23/00**

---

(54) Vorrichtung zur Synchronization optischer Fernsteuerungen mit erweiterbarem Code.

---

(30) Priorität: **31.10.86 FR 8615169**

(43) Veröffentlichungstag der Anmeldung:
**04.05.88 Patentblatt 88/18**

(45) Bekanntmachung des Hinweises auf die
Patenterteilung:
**02.05.91 Patentblatt 91/18**

(84) Benannte Vertragsstaaten:
**DE ES FR GB IT**

(56) Entgegenhaltungen:
**EP-A- 0 106 273**
**CH-A- 625 923**
**DE-A- 3 332 667**

(73) Patentinhaber: **VALEO NEIMAN**
**12bis, rue Maurice Berteaux**
**F-78290 CROISSY-SUR-SEINE(FR)**

(72) Erfinder: **Philippe, Patrick**
**Chemin de la Pissotte**
**F-78440 Jambville(FR)**

(74) Vertreter: **Cohausz & Florack Patentanwälte**
**Postfach 14 01 61 Schumannstrasse 97**
**W-4000 Düsseldorf 1(DE)**

## Beschreibung

Die Erfindung betrifft eine Vorrichtung zur Synchronisation einer optischen Fernsteuerung mit veränderbarem Code, bei der die Signale von einer einzigen Diode sowohl empfangen als auch gesendet werden. Die Codenachricht-Fernsteuerung, insbesondere für Sicherheitseinrichtungen, wie z.B. Schlösser, Diebstahlsicherungen, Alarmzentralen, war Gegenstand einer erheblichen Entwicklung, besonders innerhalb der Automobilindustrie.

Üblicherweise ist in solchen Fernsteuervorrichtungen die codierte Nachricht festgespeichert, was die Herstellung einfacher, wirksamer, wirtschaftlicher und raumsparender Fernsteuerungsvorrichtung ermöglicht. Bei diesen bekannten Vorrichtungen kann der Festcode jedoch relativ leicht von einer Person gelesen und reproduziert werden, die sich im Besitz des Senders befindet oder eine gesendete Nachricht auffängt.

Aus diesen Gründen wurde die Benutzung variabler Codes vorgeschlagen, d.h. die Benutzung von Codes, die sich bei jeder Benutzung entsprechend mehr oder weniger zufälligen Gesetzen ändern.

Aufgrund der Tatsache, daß der Sender betätigt werden Kann, ohne das der Empfänger davon weiß, ist es jedoch erforderlich, den Sender mit dem Empfänger synchronisieren zu können. Üblicherweise erfolgt diese Synchronisation mit Hilfe eines vom Sender gesendeten Befehls.

Dieses Synchronisationsverfahren weist jedoch den Nachteil auf, daß die Synchronisationsnachricht durch aufeinanderfolgende Sendungen sämtlicher möglicher Codes festgestellt oder abgefragt werden kann.

Um eine solche Decodierung der Synchronisationsnachricht auszuschließen, ist es daher vorzuziehen, Sender und Empfänger miteinander in Dialog treten zu lassen. Der Sender sendet dabei einen zuerst Synchronisations-Befehlscode aus und anschließend fragen sich Sender und Empfänger zur Erkennung gegenseitig ab, in dem sie zufällig Codes aussenden, die der jeweils andere, als Empfänger oder Sender, entsprechend einem Gesetz umwandeln muß, welches von einem besonderen Basiscode ausgeht.

Ein derartiges Dialogverfahren setzt voraus, daß der Sender mit einer Empfangsfunktion und der Empfänger mit einer Sendefunktion versehen ist. Die Einbeziehung einer Empfangsfunktion in den Sender bzw. eines Senders in den Empfänger bringt Platz- und Kostenprobleme mit sich.

Daher ist man bemüht, die Sende- und Empfangsfunktion durch ein bifunktioneles Element auszuführen. Ein solches Element findet beispielsweise in der aus EP-0106273 bekannten Vorrichtung Verwendung. In der Praxis erweist sich diese, wegen der Notwendigkeit, Tastenkombinationen zu drücken, um den Befehlscode abzusetzen, jedoch als unhandlich.

Die Aufgabe der Erfindung besteht darin, eine Vorrichtung zur Synchronisation einer Fernsteuerung mit veränderbarem Code anzugeben, bei der ein einziges Element die Sende- und Empfangsfunktion ausführt und die sich durch eine besonders einfache Handhabung auszeichnet.

Diese Aufgabe wird erfindungsgemäß dadurch gelöst, daß die Umschaltung der Diode zwischen einem Sende- und Empfangsweg durch ein Umschaltelement auslösbar ist, daß im Sendeweg der Eingang der Diode mit dem Ausgang eines Verstärkers und der Ausgang der Diode mit einem Senderausgang verbunden ist, der über einen Widerstand an Erde liegt, daß im Empfangsweg der Eingang der Diode mit dem Eingang eines zweiten Verstärkers und der Ausgang der Diode mit einem Empfangsausgang verbunden ist, der an einer Spannungsquelle liegt und daß die Verstärker mit einer Decodierschaltung verbunden sind, die die Sendesignale erzeugen oder die Empfangssignale entschlüsselt.

Bei einer solchen Schaltung werden die Photonen, die aus der Emitter diode des Empfängers übermittelten Lichtnachricht resultieren in der Nähe des Anschlußes der Emitterdiode des Senders empfangen und setzen Defektelektronen frei, die zur einer Erhöhung des Rückstroms führen, die proportional zur einfallenden Lichtintensität ist. Dieser verstärkter Rückstrom wird dann in der Decodierschaltung entschlüsselt. Die Umschaltung zwischen Sender- und Empfangsfunktion kann durch längere Betätigung einer einzigen Sendetaste am Sender ausgelöst werden.

Eine Empfangsdiode in einem Empfänger kann in gleicher Weise benutzt werden, wenn sie in eine Sendestellung umschaltbar ist.

Im folgenden soll die Erfindung anhand eines Beispieles erläutert werden.

Die Leuchtdiode D kann an ihrem Eingang auf eine Empfangseinspeisung a oder eine Sendeeinspeisung b umgeschaltet werden. Gleichzeitig mit dieser Umschaltung wird der Ausgang der Diode D auf einen Empfangsausgang d umgeschaltet, der mit einer Plusspanungsquelle $+V$ verbunden ist, oder auf einen Sendeausgang c, der über einen Widerstand $R_1$ an Erde liegt.

Der Eingang der Diode a ist über einen Verstärker $A_1$ mit einer Decodierschaltung CD verbunden, die zusätzlich über einen Verstärker $A_2$ mit dem Eingang b der Diode verbunden ist.

Die Umschaltung zwischen Sendung/Empfang COM kann beispielsweise durch einen Schalter am Sender verwirklicht werden. Durch eine längere Betätigung dieses Schalters am Sender kann die Aussendung des Synchronistionsbefehlscodes ausgelöst werden.

Die Erfindung dient sowohl zur Initialisierung als auch zur wiederholten Aktualisierung des Systems.

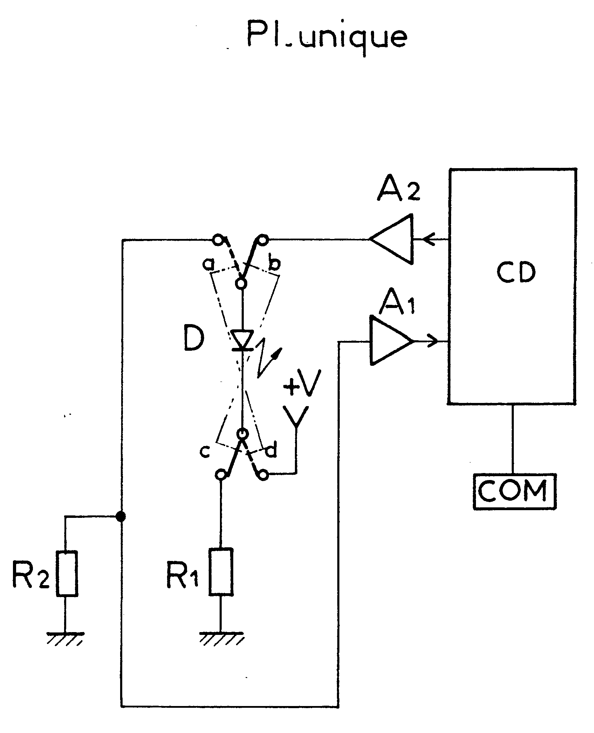

**Ansprüche**

1. Vorrichtung zur Synchronisation einer optischen Fernsteuerung mit veränderbarem Code, bei der die Signale von einer einzigen Diode (D) sowohl empfangen als auch gesendet werden, **dadurch gekennzeichnet,**

   - daß die Umschaltung der Diode (D) zwischen einem Sende- und Empfangsweg durch ein Umschaltelement (COM) auslösbar ist,
   - daß im Sendeweg der Eingang der Diode mit dem Ausgang (b) eines Verstärkers ($A_2$) und der Ausgang der Diode (D) mit einem Senderausgang (c) verbunden ist, der über einen Widerstand ($R_1$) an Erde liegt,
   - daß im Empfangsweg der Eingang der Diode mit dem Eingang (a) eines zweiten Verstärkers ($A_1$) und der Ausgang der Diode (D) mit einem Empfangsausgang (d) verbunden ist, der an einer Spannungsquelle ($+V$) liegt und
   - daß die Verstärker ($A_1$, $A_2$) mit einer Decodierschaltung verbunden sind, die die Sendesignale erzeugt oder die Empfangssignale entschlüsselt.

2. Vorrichtung gemäß Anspruch 1, **dadurch gekennzeichnet,** daß die Diode (D) eine Empfangsdiode ist, die in eine Sendeschaltung schaltbar ist.

**Claims**

1. A device for the synchronisation of an optical remote control comprising an alterable code wherein the signals are both received and emitted by a single diode (D), characterized in that

   - the switching of the diode (D) between an emitting and receiving path can be triggered by a switching element (COM),
   - in the emitting path the input of the diode is connected to the output (b) of an amplifier ($A_2$) and the output of the diode (D) is connected to an emitter output (c) which is connected to earth through a resistor ($R_1$),
   - in the receiving path the input of the diode is connected to the input (a) of a second amplifier ($A_1$) and the output of the diode (D) is connected to an receiver output (d) which is connected to a voltage source ($+V$), and
   - the amplifiers ($A_1$, $A_2$) are connected to a decoder switching device which produces the transmitted signal or decodes the received signal.

2. A device according to claim 1, characterized in that the diode (D) is a detector diode which can be switched into an emitting circuit.

**Revendications**

1. Dispositif de synchronisation d'une télécommande optique à code évolutif, dans laquelle les signaux sont aussi bien reçus qu'émis par une diode unique (D), caractérisé

   - en ce que la commutation de la diode (D) entre un mode émission et un mode réception, est commandable par un élément de commutation (COM),
   - en ce que, en mode émission, l'entrée de la diode est reliée à la sortie (b) d'un amplificateur ($A_2$) et la sortie de la diode (D) est reliée à la sortie d'émission (c) qui, par l'intermédiaire d'une résistance ($R_1$) se trouve à la masse,
   - en ce que, en mode réception, l'entrée de la diode est reliée à l'entrée d'un second amplificateur ($A_1$) et la sortie de la diode (D) est reliée à une sortie réception (d), qui est reliée à une source de tension ($+V$),
   - en ce que les amplificateurs ($A_1$, $A_2$) sont reliés à un circuit décodeur qui produit le signal d'émission ou qui décode le signal de réception.

2. Dispositif selon la revendication 1, caractérisé en ce que la diode (D) est une diode de réception qui peut être commutée dans un circuit d'émission.

Pl.unique